# EUROPÄISCHE PATENTANMELDUNG

(11) **EP 1 894 862 A2**
(43) Veröffentlichungstag der Anmeldung: **05.03.2008**
(21) Anmeldenummer: 07016805.9
(22) Anmeldetag: 28.08.2007
(51) Int. Cl.: B65G 25/08, B65G 47/14, B27B 31/00

(54) **Rundholz-Ausrichtungsvorrichtung**

(30) Priorität: 01.09.2006 DE 102006041342
(71) Anmelder: Holtec GmbH & Co.KG, 53940 Hellenthal (DE)
(72) Erfinder: Gebele, Alexander, 53879 Euskirchen (DE); Pützer, Alfred, 3940 Hellenthal (DE)
(74) Vertreter: Kröncke, Rolf

(57) **Zusammenfassung**

Eine Rundholz-Ausrichtvorrichtung (1) mit einem Rollengang (5), der eine Mehrzahl parallel zueinander ausgerichtete, sich in eine Förderrichtung (x) über eine Vorschublänge erstreckende, rotierbar angeordnete Rollen (6) hat, mit mindestens einer mit den Rollen (6) gekoppelten Antriebseinheit zum Rotationsantrieb der Rollen (6) und mit einer Ausrichtwand (8) an dem tangential zur Rotationsrichtung quer zur Förderrichtung (x) liegende Ende des Rollengangs (5), die sich über die Vorschublänge erstreckt wird beschrieben. Die Rundholzanlage (1) ist derart eingerichtet, dass Rundholzstämme (10) quer zur Förderrichtung (x) auf den Rollengang (5) gebracht und von den Rollen (6) in Richtung der Ausrichtwand (8) befördert werden. Der Rollengang (6) hat Mitnehmerräder (7) mit sich quer zu den Rotationsachsen der Rollen (6) des Rollengangs (5) erstreckenden Rotationsachsen, wobei die Mitnehmerräder (7) um die jeweiligen Rotationsachsen rotierbar angetrieben sind und am Umfang Mitnehmerelemente (11) zum Transportieren des Rundholzes in Förderrichtung (x) über die Vorschublänge vom Einlassbereich über den Rollengang (5) zum Auslassbereich haben.

## Beschreibung

Die Erfindung betrifft eine Rundholz-Ausrichtvorrichtung mit einem Rollengang, der eine Mehrzahl parallel zueinander ausgerichtete, sich in eine Förderrichtung über eine Vorschublänge erstreckende rotierbar angeordnete Rollen hat, mit mindestens einer mit den Rollen gekoppelten Antriebseinheit zum Rotationsantrieb der Rollen, mit einer Ausrichtwand an dem tangential zur Rotationsrichtung quer zur Förderrichtung liegenden Ende des Rollengangs, die sich über die Vorschublänge erstreckt, und wobei die Rundholz-Ausrichtvorrichtung derart eingerichtet ist, dass Rundholz quer zur Förderrichtung auf den Rollengang gebracht und von den Rollen in Richtung der Ausrichtwand befördert wird.

Bei der Verarbeitung von Rundholz wird das Rundholz oftmals in Längsrichtung auf einem Förderband zu einer Bearbeitungsanlage transportiert. Das Auflegen des Rundholzes erfolgt dabei in der Regel durch Querförderanlagen, mit denen das Rundholz in eine Förderrichtung quer zur Längsrichtung des Rundholzes transportiert wird. Zum Vereinzeln und Weitertransportieren des Rundholzes in Richtung quer zur Längsrichtung des Rundholzes werden oftmals Kettenförderer oder Treppenförderer eingesetzt.

Bei der Zufuhr des Rundholzes mit Kettenförderern zu einem Längsförderband, das das Rundholz in Längsrichtung zur Bearbeitungsanlage weitertransportiert, ist bekannt, eine Ausrichtanlage in den Querförderbereich einzubauen. Eine solche an sich bekannte Ausrichtanlage hat einen Rollengang mit einer Mehrzahl parallel zueinander ausgerichteter, sich in eine Förderrichtung über eine Vorschublänge erstreckender rotierbar angeordneter Rollen, sowie mindestens eine mit den Rollen gekoppelte Antriebseinheit zum Rotationsantrieb der Rollen. Durch diese angetriebenen Rollen werden die Rundholzstämme tangential zur Rotationsrichtung zu einer Ausrichtwand befördert, gegen die sie mit Ihrer Stirnseite anstoßen. Auf diese Weise werden die Rundhölzer gleich ausgerichtet, so dass beim nachfolgenden Abtransport der Rundhölzer mit dem Förderband die zur Weiterverarbeitung oftmals erforderlichen gleichen Abstände zwischen zwei Rundholzstämmen sichergestellt werden kann.

Die bekannte, mit einem Kettenförderer gekoppelte Ausrichtvorrichtung hat an sich den Vorteil, dass das Vereinzeln und Ausrichten der Rundholzstämme in einer Anlage erfolgen kann. Hierzu werden die Rundholzstämme vom Vereinzelungsförderer Stück für Stück nach oben gefördert. Der Vereinzelungsförderer hat eine Förderkette, auf der Mitnehmer in Leistenform angebracht sind. Die Rundholzstämme werden dann über Ausrichtrollen gezogen. Nachteilig bei dieser Lösung ist, dass die Förderketten einem hohen Verschleiß ausgesetzt sind und erhebliche Mengen an Schmierstoff benötigen.

Aufgabe der vorliegenden Erfindung ist es daher, eine verbesserte Rundholz-Ausrichtvorrichtung zu schaffen.

Die Aufgabe wird mit der Rundholz-Vorrichtung der eingangs genannten Art dadurch gelöst, dass der Rollengang Mitnehmerräder mit sich quer zu den Rotationsachsen der Rollen erstreckenden Rotationsachsen hat, wobei die Mitnehmerräder um die jeweiligen Rotationsachsen rotierbar angetrieben sind und am Umfang Mitnehmerelemente zum Transportieren des Rundholzes in Förderrichtung über die Vorschublänge vom Einlassbereich über den Rollengang zum Auslassbereich haben.

Die Mitnehmerräder haben den Vorteil, dass sie erheblich weniger verschleißanfällig sind als Kettenförderer und dennoch in Verbindung mit einem Rollengang zur Ausrichtung der Rundholzstämme und zuverlässigem vereinzelten Weitertransport der Rundholzstämme zu einem Förderband sorgen. Dabei kann auch durch die Mitnehmerräder sichergestellt werden, dass die Rundholzstämme zu genau vorgegebenen Zeitpunkten auf dem Förderband abgelegt werden. Dies ist wesentlich, da hierdurch eine automatisierte Weiterverarbeitung in einer nachfolgenden Bearbeitungsanlage sichergestellt werden kann.

Die Mitnehmerräder haben vorzugsweise einen Durchmesser, der mindestens so groß wie die Vorschublänge der Rollen des Rollengangs ist. Auf diese Weise kann erreicht werden, dass mit jeweils einem einzigen Mitnehmerrad in Förderrichtung die Rundholzstämme vom Einlassbereich des Rollengangs zum Auslassbereich transportiert werden können.

Angrenzend an eine Rolle des Rollengangs ist vorzugsweise ein zugeordnetes Mitnehmerrad angeordnet. Hierdurch wird ein gleichmäßiger Transport der Rundholzstämme quer zu ihrer Längsrichtung gewährleistet.

Die Mitnehmerräder haben vorzugsweise über den Umfang verteilt angeordnete Mitnehmerarme, die sich von einer vom Außenumfang nach innen gerichteten, die Rotationsachse der Mitnehmerräder nicht schneidenden Flucht radial versetzt erstrecken. Die vorzugsweise gleichmäßig über den Umfang verteilten Mitnehmerarme verlaufen somit nicht radial nach innen zum Zentrum der Mitnehmerräder, sondern versetzt hierzu. Dies hat den Vorteil, dass ein Verklemmen der Rundholzstämme durch die Mitnehmerarme insbesondere bei dünnen Rundholzstämmen verhindert wird. Ein weiter Effekt ist, dass die Rundholzstämme schonender aufgenommen und mit einem größeren Impuls im Auslassbereich abgeworfen werden können, da die Mitnehmerarme beim Abwerfen der Rundholzstämme in der Regel annährend tangential zum Umfang der Rundholzstämme stehen.

In einer anderen Ausführungsform können die Mitnehmerräder als Exzenterscheiben ausgeführt sein. Besonders vorteilhaft ist es, wenn mit den Exzenterscheiben jeweils sich in Vorschubrichtung erstreckende Finger aufweisende, durch die Exenterscheiben auf- und abwärtsbewegbare Mitnehmerstege verbunden sind. Der vereinzelte Transport der Rundholzstämme über den Rollengang erfolgt dann vergleichbar zum Transport mit einem Treppenförderer.

Die am Einlassbereich des Rollengangs angeordnete Rundholzzufuhreinrichtung ist vorzugsweise ein Treppenförderer zur Querförderung von Rundholzstämmen, kann aber auch ein Kettenförderer sein.

Die Erfindung wird nachfolgend beispielhaft anhand der beigefügten Zeichnungen näher erläutert. Es zeigen:
- Figur 1 -: Draufsicht auf eine Rundholz-Ausrichtvorrichtung mit vorgelagertem Treppenförderer und nachgelagertem Rollenfördergang;
- Figur 2 -: Querschnittsansicht der Rundholz-Ausrichtvorrichtung aus Figur 1.

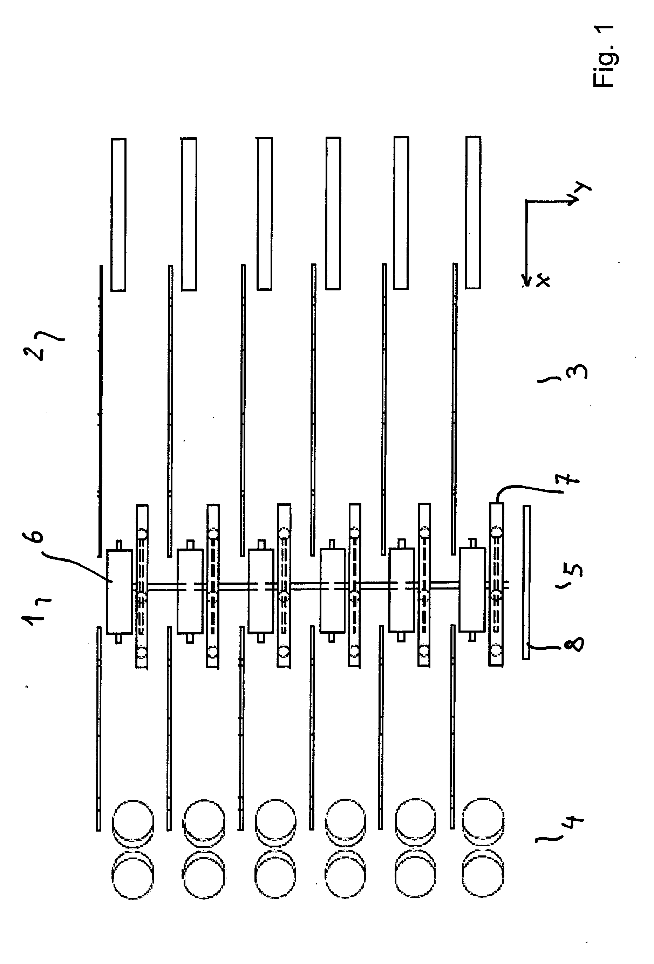

Figur 1 lässt eine Draufsicht auf eine Rundholz-Ausrichtvorrichtung 1 erkennen. Die Rundholz-Ausrichtvorrichtung 1 ist Teil einer Querförderanlage 2 für Rundholzstämme mit einem Treppenförderer 3 zum Vereinzeln und Transportieren von Rundholzstämmen in eine Förderrichtung quer zur Längsrichtung der Rundholzstämme auf die Rundholz-Ausrichtvorrichtung 1. Am Auslassbereich der Rundholz-Ausrichtvorrichtung ist eine sich quer zur Förderrichtung x der Rundholz-Ausrichtvorrichtung 1 erstreckende Förderanlage 4 mit einem V-förmigen Rollengang angeordnet, um die vereinzelten Rundholzstämme in Längsrichtung abzutransportieren und in eine nicht dargestellte nachgestellte Bearbeitungsmaschine zu führen.

Der Treppenförderer 3 und die Förderanlage 4 sind an sich bekannt und werden daher nicht weiter im Einzelnen beschrieben.

Die Rundholz-Ausrichtvorrichtung 1 hat einen Rollengang 5 mit einer Mehrzahl von parallel zueinander in Förderrichtung x ausgerichteten Rollen 6, die sich über eine Vorschublänge der Rundholz-Ausrichtvorrichtung 1 in Förderrichtung x erstrecken. Die Rollen sind jeweils um eine in x-Richtung ausgerichtete Rotationsachse rotierbar gelagert und werden mit jeweils einer oder einer gemeinsamen Antriebseinheit (nicht dargestellt) angetrieben.

Im Zwischenraum zwischen jeweils zwei Rollen 6 sowie in Förderrichtung x gesehen links neben der äußeren linken Rolle 6 sind jeweils Mitnehmerräder 7 angeordnet, die um eine sich quer zur Förderrichtung x in y-Richtung erstreckende Rotationsachse rotierbar sind. Die Rotationsachsen der Mitnehmerräder 7 sind fluchtend zueinander ausgerichtet. Mit Hilfe der Mitnehmerräder 7 werden die vereinzelt in den Rollengang 5 aufgegebenen Rundholzstämme in Förderrichtung x zum Auslassbereich befördert, während die Rundholzstämme durch die Rotation der Rollen 6 quer zur Förderrichtung x in y-Richtung gegen eine dort angeordnete Ausrichtwand 8 geführt werden. Hierdurch werden die Rundholzstämme mit ihrer Stirnseite gleichmäßig ausgerichtet, so dass sie direkt oder wie in dem dargestellten Beispiel über einen weiteren Treppenförderer 9 der Förderanlage 4 in den V-Rollengang geführt zu werden. Damit wird erreicht, dass die Rundholzstämme immer mit einem definierten, vorzugsweise gleichen Abstand zueinander auf der Förderanlage 4 in Längsrichtung y weiter transportiert werden.

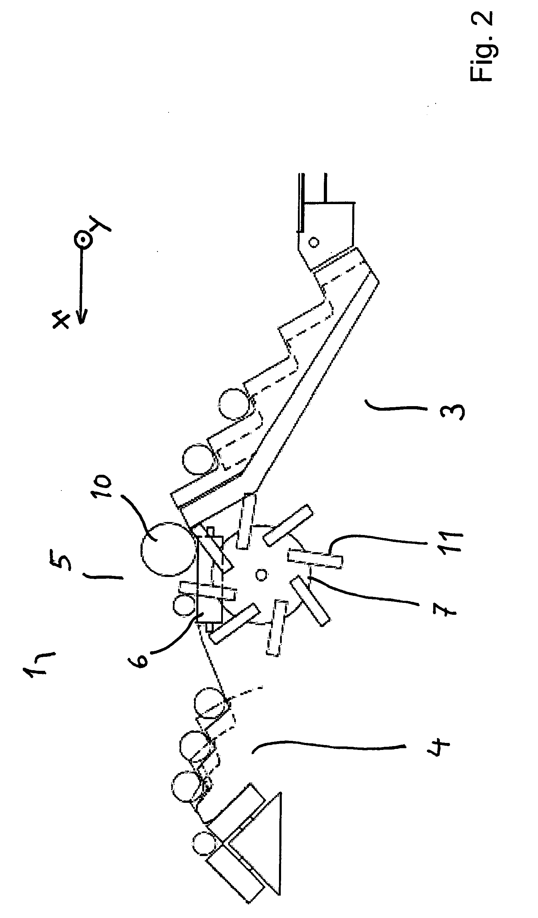

Figur 2 lässt die Rundholz-Ausrichtvorrichtung 1 mit vorgeschaltetem Treppenförderer 3 und nachgeschalteter Förderanlage 4 in Querschnittsansicht erkennen. Es wird deutlich, dass die Rundholzstämme 10 in Förderrichtung x über den Rollengang 5 geführt werden, wobei sich die Rollen 6 in Förderrichtung x erstrecken und einen Vortrieb der Rundholzstämme 10 quer zur Förderrichtung x bewirken.

Weiterhin ist erkennbar, dass die Mitnehmerräder 7 über den Umfang verteilt angeordnete Mitnehmerelemente 11 haben, um die Rundholzstämme 10 vom Einlassbereich zum Auslassbereich zu transportieren. Die Mitnehmerelemente 11 sind in dem dargestellten Ausführungsbeispiel als nach innen gerichtete Streben ausgeführt, wobei sich die Mitnehmerelemente 11 vom Außenumfang nach innen in einer die Rotationsachse des Mitnehmerrades 7 nicht schneidenden Flucht radial versetzt erstrecken. Dies hat den Vorteil, dass ein Verklemmen der Rundholzstämme durch die Mitnehmerarme insbesondere bei dünnen Rundholzstämmen verhindert wird. Ein weiterer Effekt ist, dass die Rundholzstämme 10 schonend im Einlassbereich aufgenommen und im Auslassbereich abgeworfen werden. Durch diese Ausrichtung der Mitnehmerelemente 11 ist zudem ein Transport für Rundholzstämme 10 mit unterschiedlichem Durchmesser gewährleistet.

Es wird weiterhin deutlich, dass sich die Auflagekante der Rollen 6 für die Rundholzstämme 10 befindet sich unterhalb der größten Höhe des Umfangs des jeweiligen Mitnehmerrades 7 befindet, so dass die Mitnehmerelemente 11 über die Rollen 6 hervorstehen, wenn sie sich an den Rollen 6 vorbei bewegen.

## Patentansprüche

1. Rundholz-Ausrichtvorrichtung (1) mit einem Rollengang (5), der eine Mehrzahl parallel zueinander ausgerichtete, sich in eine Förderrichtung (x) über eine Vorschublänge erstreckende rotierbar angeordnete Rollen (6) hat, mit mindestens einer mit den Rollen (6) gekoppelten Antriebseinheit zum Rotationsantrieb der Rollen (6), mit einer Ausrichtwand (8) an dem tangential zur Rotationsrichtung quer zur Förderrichtung (x) liegenden Ende des Rollengangs (5), die sich über die Vorschublänge erstreckt, wobei die Rundholz-Ausrichtvorrichtung (1) derart eingerichtet ist, dass Rundholz quer zur Förderrichtung (x) liegend auf den Rollengang (5) gebracht und von den Rollen (6) in Richtung der Ausrichtwand (8) befördert wird, **dadurch gekennzeichnet, dass** der Rollengang Mitnehmerräder (7) mit sich quer zu den Rotationsachsen der Rollen (6) des Rollengangs (5) erstreckenden Rotationsachsen hat, wobei die Mitnehmerräder (7) um die jeweiligen Rotationsachsen rotierbar angetrieben sind und am Umfang Mitnehmerelemente (11) zum Transportieren des Rundholzes in Förderrichtung (x) über die Vorschublänge vom Einlassbereich über den Rollengang (5) zum Auslassbereich haben.

2. Rundholz-Ausrichtvorrichtung (1) nach Anspruch 1, **dadurch gekennzeichnet, dass** die Mitnehmerräder (7) jeweils einen Durchmesser haben, der mindestens so groß wie die Vorschublänge der Rollen (6) des Rollengangs (5) ist.

3. Rundholz-Ausrichtvorrichtung (1) nach Anspruch 1 oder 2, **dadurch gekennzeichnet, dass** angrenzend an eine Rolle (6) des Rollengangs (5) jeweils ein zugeordnetes Mitnehmerrad (7) angeordnet ist.

4. Rundholz-Ausrichtvorrichtung (1) nach einem der Ansprüche 1 bis 3, **dadurch gekennzeichnet, dass** die Mitnehmerräder (7) über den Umfang verteilt angeordnete Mitnehmerarme (11) haben, die sich in einer vom Außenumfang nach innen gerichteten, die Rotationsachse der Mitnehmerräder (7) nicht schneidenden Flucht radial versetzt erstrecken.

5. Rundholz-Ausrichtvorrichtung (1) nach einem der vorhergehenden Ansprüche, **dadurch gekennzeichnet, dass** die Mitnehmerräder (7) als Exzenterscheiben ausgeführt sind.

6. Rundholz-Ausrichtvorrichtung (1) nach Anspruch 5, **dadurch gekennzeichnet, dass** mit den Exzenterscheiben sich jeweils sich in Vorschubrichtung erstreckende Finger aufweisende auf- und abwärtsbewegbare Mitnehmerstege verbunden sind.

7. Rundholz-Ausrichtvorrichtung (1) nach einem der vorhergehenden Ansprüche, **gekennzeichnet durch** mit einer Rundholzzufuhreinrichtung (3) am Einlassbereich des Rollengangs (5) und einem sich quer zur Förderrichtung (x) erstreckenden Förderband am Ausgangsbereich des Rollengangs (5).

8. Rundholz-Ausrichtvorrichtung (1) nach Anspruch 7, **dadurch gekennzeichnet, dass** die Rundholzzufuhreinrichtung (3) am Einlassbereich ein Treppenförderer zur Querförderung von Rundholz ist.

9. Rundholz-Ausrichtvorrichtung (1) nach Anspruch 7, **dadurch gekennzeichnet, dass** die Rundholzzufuhreinrichtung (3) am Einlassbereich ein Kettenförderer zur Querförderung von Rundholz ist.
